# FASCICULE DE BREVET EUROPEEN

(11) **EP 4 092 291 B1**
(45) Date de publication et mention de la délivrance du brevet: **29.11.2023**
(21) Numéro de dépôt: 22174185.3
(22) Date de dépôt: 18.05.2022
(51) Int. Cl.: F16F 15/14

(54) **DISPOSITIF D AMORTISSEMENT PENDULAIRE**
PENDELDÄMPFUNGSGERÄT
PENDULUM DAMPING DEVICE

(30) Priorité: 19.05.2021 FR 2105214
(43) Date de publication de la demande: 23.11.2022
(73) Titulaire: VALEO EMBRAYAGES, 80009 Amiens (FR)
(72) Inventeur: NERRIERE, Adrien, 80009 Amiens (FR); KLEIN, Vincent, 80009 Amiens (FR)
(74) Mandataire: Valeo Powertrain Systems

(56) Documents cités:
- CN-A- 112 228 508
- DE-A1-102017 109 480
- DE-A1-102018 131 091
- DE-A1-102019 114 431
- FR-A1- 3 031 367
- US-B2- 9 765 848

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

Ce double volant amortisseur est par exemple intégré à un disque d'embrayage à friction ou à un système de transmission comprenant un double embrayage à sec ou humide. Dans ce dernier cas, le système de transmission peut ou non être intégré à un véhicule à propulsion hybride.

Il est connu, par exemple de la demande DE 10 2018 131 091, de prévoir un dispositif d'amortissement pendulaire comprenant :
- un support mobile en rotation autour d'un axe, et comprenant une patte coopérant avec des organes de rappel élastique,
- au moins un corps pendulaire, mobile par rapport au support et comprenant deux masses pendulaires respectivement disposées axialement d'un côté du support, ces deux masses pendulaires étant solidarisées entre elles par un organe de liaison, et
- deux organes de roulement guidant le déplacement du corps pendulaire par rapport au support, chaque organe de roulement coopérant avec une première piste de roulement solidaire du support et avec une deuxième piste de roulement solidaire du corps pendulaire. Dans DE 10 2018 131 091, chaque première piste de roulement est définie par un bord d'une même fenêtre ménagée dans le support radialement intérieurement par rapport à la patte, et chaque deuxième piste de roulement est définie par un bord d'une même entretoise de l'organe de liaison. Du fait de la taille important de la fenêtre dans le support, ce dernier servant à la fois à porter les corps pendulaires mais également à transmettre le couple reçu des organes de rappel élastique via la patte, des efforts importants peuvent s'exercer sous centrifugation sur les zones du support disposées radialement entre la fenêtre et la patte. Le support peut alors être fragilisé, voire détruit.

Par ailleurs, le document CN112228508 qui est considéré comme l'art antérieur le plus proche, décrit un dispositif d'amortissement pendulaire selon le préambule de la revendication 1.

Il existe un besoin pour disposer d'un dispositif d'amortissement pendulaire avec un support dont la robustesse est améliorée.

L'invention a pour objet de répondre à ce besoin et elle y parvient, selon l'un de ses aspects, à l'aide d'un dispositif d'amortissement pendulaire, comprenant :
- un support mobile en rotation autour d'un axe, et comprenant une patte apte à coopérer avec des organes de rappel élastique,
- au moins un corps pendulaire, mobile par rapport au support et comprenant deux masses pendulaires respectivement disposées axialement d'un côté du support, ces deux masses pendulaires étant solidarisées entre elles par un organe de liaison, et
- deux organes de roulement guidant le déplacement du corps pendulaire par rapport au support, chaque organe de roulement coopérant avec une première piste de roulement solidaire du support et avec une deuxième piste de roulement solidaire du corps pendulaire, chaque première piste de roulement étant définie par un bord d'une même fenêtre ménagée dans le support radialement intérieurement par rapport à la patte, et chaque deuxième piste de roulement étant définie par un bord d'une même entretoise de l'organe de liaison, la fenêtre ménagée dans le support définissant un secteur angulaire maximal depuis l'axe de rotation du support, et la patte étant disposée en tout ou partie dans ce secteur angulaire, la patte étant située angulairement ailleurs qu'entre les deux premières pistes de roulement.

Ce positionnement relatif de la patte par rapport aux premières pistes de roulement permet de réduire les contraintes exercées sur le support puisque l'on éloigne la patte, qui est soumise aux contraintes liées à la transmission du couple venant des organes de rappel élastique, des premières pistes de roulement qui sont soumises aux contraintes liées aux efforts exercés sur le support par le corps pendulaire sous centrifugation. On réduit ainsi globalement et localement les contraintes sur le support en assurant au sein de ce dernier une meilleure répartition de ces contraintes.

Au sens de la présente demande :
- « axialement » signifie « parallèlement à l'axe de rotation »,
- « radialement » signifie « le long d'une droite appartenant à un plan orthogonal à l'axe de rotation et coupant cet axe de rotation»,
- « angulairement » ou « circonférentiellement » signifie « autour de l'axe de rotation »,
- « orthoradialement » signifie « perpendiculairement à une direction radiale »,
- « solidaire » signifie « rigidement couplé»,
- le secteur angulaire maximal défini par la fenêtre depuis l'axe de rotation du support correspond, dans un plan perpendiculaire à cet axe de rotation, à l'angle maximal formé entre deux droites passant chacune par l'axe de rotation du support et coupant chacune en au moins un point la fenêtre,
- l'ordre d'excitation d'un moteur thermique est égal au nombre d'explosions de ce moteur par tour de vilebrequin,
- la position de repos d'un corps pendulaire est celle dans laquelle ce corps pendulaire est centrifugé sans être soumis à des oscillations de torsion provenant des acyclismes du moteur thermique. Pour cette position de repos, la valeur de l'abscisse curviligne du centre de gravité du corps pendulaire est nulle, et
- une valeur d'ordre est filtrée par le dispositif d'amortissement pendulaire lorsque le rapport entre : l'amplitude d'une oscillation de torsion à cette valeur d'ordre en présence du dispositif d'amortissement pendulaire, et cette même amplitude en l'absence du dispositif d'amortissement pendulaire est inférieur à 0,2, notamment inférieur à 0,1.

Le corps pendulaire peut se déplacer angulairement entre deux positions de butée contre le support, et le corps pendulaire peut être angulairement en chevauchement avec la patte dans l'une de ces positions de butée. Autrement dit, la patte présente le positionnement mentionné ci-dessus vis-à-vis des premières pistes de roulement du support dédiées au corps pendulaire dont elle est le plus proche, angulairement.

Chaque première piste de roulement peut définir un secteur angulaire maximal depuis l'axe de rotation du support et la patte peut n'être disposée à l'intérieur d'aucun de ces deux secteurs angulaires maximaux définis par les premières pistes de roulement. Par « secteur angulaire maximal défini par une première piste de roulement », on désigne, dans un plan perpendiculaire à cet axe de rotation, l'angle maximal formé entre deux droites passant chacune par l'axe de rotation du support et coupant chacune cette première piste de roulement. Ainsi, la patte peut être angulairement au-delà de chaque première piste de roulement, n'étant ni entre ces deux premières pistes de roulement, ni au niveau de l'une de ces deux premières pistes de roulement. La patte peut ainsi occuper en toute ou partie une position chevauchant angulairement la fenêtre tout en étant au-delà de chaque première piste de roulement. On améliore alors encore la répartition des contraintes dans le support entre les contraintes liées à la transmission du couple en provenance des organes de rappel élastique, et celles liées aux efforts exercés par le corps pendulaire sous centrifugation.

La patte peut définir la portion du support radialement la plus éloignée de l'axe de rotation du support.

Dans tout ce qui précède, le dispositif peut comprendre trois corps pendulaires se succédant angulairement autour de l'axe de rotation du support. Le dispositif peut ainsi comprendre une pluralité de plans perpendiculaires à l'axe de rotation dans chacun desquels tous ces corps pendulaires sont disposés.

Dans tout ce qui précède, le support peut comprendre deux pattes, chaque patte coopérant avec des organes de ressort élastique. Ces deux pattes peuvent être diamétralement opposées par rapport à l'axe de rotation du support.

Chaque patte peut présenter la disposition précitée par rapport à une fenêtre du support. Dans le cas où trois corps pendulaires se succèdent angulairement et où deux pattes diamétralement opposées sont présentes sur le support, on a ainsi :
- un premier corps pendulaire associé à une première fenêtre définissant un secteur angulaire maximal depuis l'axe de rotation du support, et une première patte disposée en tout ou partie dans ce secteur angulaire, la première patte étant située angulairement ailleurs qu'entre les deux premières pistes de roulement associées à ce premier corps pendulaire, notamment angulairement au-delà de chacune de ces premières pistes de roulement,
- un deuxième corps pendulaire associé à une deuxième fenêtre définissant un secteur angulaire maximal depuis l'axe de rotation du support, et une deuxième patte disposée en tout ou partie dans ce secteur angulaire, la deuxième patte étant située angulairement ailleurs qu'entre les deux premières pistes de roulement associées à ce deuxième corps pendulaire, notamment angulairement au-delà de chacune de ces premières pistes de roulement, et
- un troisième corps pendulaire associé à une troisième fenêtre définissant un secteur angulaire maximal depuis l'axe de rotation du support, aucune patte n'étant disposée en tout ou partie dans ce secteur angulaire.

Un tel dispositif d'amortissement pendulaire permet, compte-tenu des différences de symétrie autour de l'axe de rotation du support pour les deux pattes et pour les trois corps pendulaires, d'assurer un positionnement relatif des corps pendulaires et des pattes réduisant les contraintes précitées sur le support.

Dans tout ce qui précède, l'organe de roulement peut présenter une surface latérale de roulement qui roule alternativement sur une première piste de roulement et sur une deuxième piste de roulement. Cette surface latérale peut subir un traitement à l'aide de la meule, ce traitement étant encore appelé « usinage par abrasion ». En variante, ou en complément, cet organe de roulement présente au moins une surface axiale en regard d'une masse pendulaire et, cette surface axiale étant en tout ou partie traitée à l'aide d'une meule. Dans ce dernier cas, la surface de la masse pendulaire en regard de la surface axiale de l'organe de roulement en tout ou partie traitée à l'aide d'une meule peut être également en tout ou partie traitée à l'aide d'une meule. Il peut s'agir de la même meule pour ces deux surfaces axialement en regard.

Dans tout ce qui précède, chaque organe de roulement est par exemple un rouleau. Chaque organe de roulement est par exemple un rouleau réalisé en acier. Le rouleau peut être creux ou plein. Ce rouleau peut ne présenter qu'un unique diamètre, tout le long de son axe longitudinal.

L'organe de liaison peut comprendre des moyens de fixation de l'entretoise à chaque masse pendulaire. L'organe de liaison comprend par exemple une pluralité de rivets assemblant l'entretoise aux deux masses pendulaires. En variante, l'entretoise est soudée aux deux masses pendulaires, vissée à ces deux masses pendulaires, ou encore emmanchée à force dans chacune de ces deux masses pendulaires.

Une portion du contour de l'entretoise définit par exemple chaque deuxième piste de roulement guidant le déplacement d'un corps pendulaire. En variante, un revêtement peut être déposé sur cette portion du contour de l'entretoise pour former une ou plusieurs deuxièmes pistes de roulement.

Dans tout ce qui précède, chaque organe de liaison peut n'être associé qu'à un seul corps pendulaire, et chaque fenêtre ménagée dans le support peut n'accueillir qu'un seul organe de liaison.

Dans tout ce qui précède, le support peut être réalisé d'une seule pièce, étant par exemple entièrement métallique.

Dans tout ce qui précède, dans le dispositif d'amortissement pendulaire, toutes les premières pistes de roulement solidaires du support peuvent avoir exactement la même forme entre elles et/ou toutes les deuxièmes pistes de roulement solidaires du corps pendulaires peuvent avoir exactement la même forme entre elles.

Dans tout ce qui précède encore, deux corps pendulaires circonférentiellement adjacents peuvent être reliés entre eux par au moins un organe de rappel élastique, par exemple selon l'enseignement des demandes EP 3 153 741, EP 3 380 750, EP 3 190 310. L'enseignement de ces demandes de brevet est incorporé par référence à la présente demande en ce qu'il concerne la connexion entre les corps pendulaires circonférentiellement adjacentes. En variante, deux corps pendulaires circonférentiellement voisins peuvent être reliés par une connexion impliquant un frottement axial, par exemple selon l'enseignement de la demande EP 3 332 147. L'enseignement de cette demande de brevet est incorporé par renvoi à la présente demande en ce qu'il concerne la connexion entre les corps pendulaires circonférentiellement adjacents.

Dans tout ce qui précède, les première(s) et deuxième(s) pistes de roulement peuvent avoir des formes choisies pour que le corps pendulaire soit déplacé par rapport au support à la fois en translation autour d'un axe fictif parallèle à l'axe de rotation du support, et également en rotation sur lui-même, notamment en rotation autour de son centre de gravité.

L'invention a encore pour objet, selon un autre de ses aspects, un composant pour système de transmission d'un véhicule automobile, le composant étant un double volant amortisseur, et comprenant :
- le dispositif d'amortissement pendulaire ci-dessus, et
- une pluralité d'organes de rappel élastique, la patte interagissant avec deux organes de rappel élastique.

Deux pattes diamétralement opposées peuvent être prévues, comme mentionné ci-dessus.

Chaque organe de rappel élastique peut être formé par un unique ressort ou par plusieurs ressorts, par exemple par deux ressorts concentriques et de raideur différente. Chaque ressort peut être un ressort droit ou un ressort courbe.

Ce double volant amortisseur peut présenter :
- un volant primaire apte à être rigidement fixé, le cas échéant via une plaque flexible, au vilebrequin du moteur thermique, et
- un volant secondaire apte à être fixé en entrée d'un embrayage ou d'un double embrayage. Le support du dispositif d'amortissement pendulaire fait alors partie du volant secondaire.

Le volant primaire est apte à être solidarisé à un vilebrequin, ce qui signifie qu'il pourra être solidarisé de façon permanente au vilebrequin. Cette solidarisation du composant primaire au vilebrequin est alors différente de celle qui se produirait sélectivement via un embrayage, par exemple.

Le volant secondaire peut encore comprendre un moyeu. Ce moyeu peut comprendre des cannelures, afin d'être emboîté sur un arbre d'entrée de boîte de vitesses ou sur un arbre d'entrée d'un double embrayage, à sec ou humide.

L'invention a encore pour objet, selon un autre de ses aspects, un système de transmission, notamment pour véhicule hybride, comprenant :
- le composant ci-dessus, et
- un double embrayage, à sec ou humide, recevant le couple en sortie de ce composant.

Le système de transmission peut encore comprendre :
- une boîte de vitesses, comprenant des pignons, définissant des rapports de boîte, et
- un essieu avant et un essieu arrière.

L'invention a encore pour objet, selon un autre de ses aspects un groupe motopropulseur de véhicule hybride, comprenant :
- le système de transmission ci-dessus, et
- une machine électrique tournante de propulsion, l'arbre de la machine électrique tournante étant solidaire en rotation :
   - d'un arbre d'entrée de la boîte de vitesses, ou
   - de l'arbre de sortie de la boîte de vitesses, ou
   - de pignons fous de la boîte de vitesses, ou
   - de l'essieu avant ou de l'essieu arrière, ou
   - du vilebrequin du moteur thermique du véhicule,

La machine électrique tournante a par exemple une tension nominale d'alimentation de 48V, ou une tension nominale d'alimentation supérieure à 200V, notamment à 300V.

L'invention pourra être mieux comprise à la lecture de la description qui va suivre d'exemples non limitatifs et à l'examen du dessin annexé sur lequel :
- la figure 1 représente un double volant amortisseur avec un dispositif d'amortissement pendulaire auquel peut s'appliquer l'invention,
- les figures 2 à 4 représentent un dispositif d'amortissement pendulaire selon un exemple de mise en oeuvre de l'invention, la figure 2 étant une vue globale, la figure 3 étant une vue différant de celle de la figure 2 par le fait que les masses pendulaires des corps pendulaires ne sont pas représentées pour des raisons de clarté, la figure 4 représentant un détail de la figure 3, et
- la figure 5 est une vue similaire de la figure 4 mais en rapport avec un dispositif d'amortissement pendulaire selon l'art antérieur.

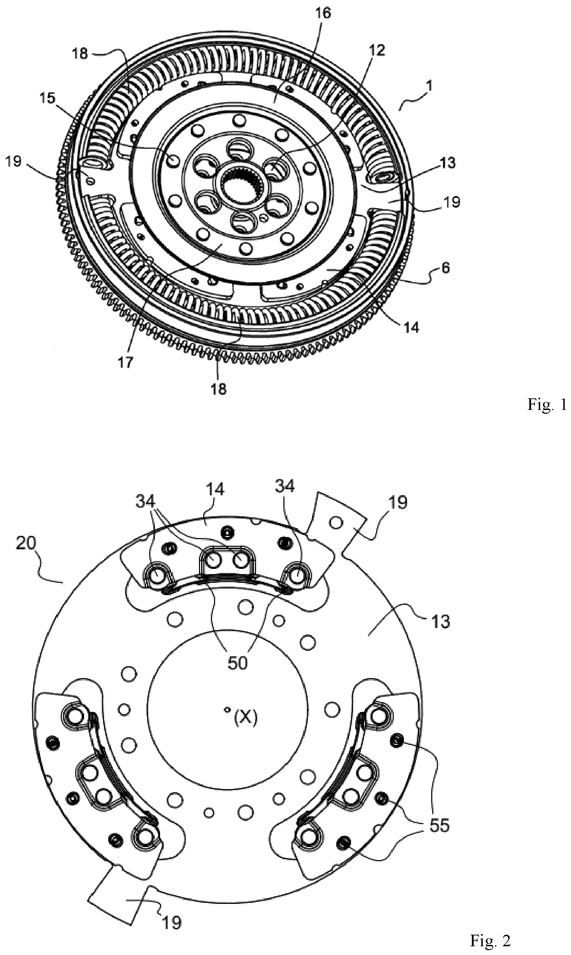

On a représenté sur la figure 1 un composant 1 pour système de transmission intégrant un dispositif d'amortissement pendulaire 20. Ce composant 1 est ici un double volant amortisseur qui est par exemple destiné à être associé à un double embrayage humide et/ou à être intégré à un groupe motopropulseur hybride de véhicule.

Le composant 1 comprend, comme on peut le voir sur la figure 1 :
- un volant primaire, et
- un volant secondaire.

Le volant primaire peut comprendre :
- un moyeu,
- une flexplate,
- une couronne de démarreur 6,
- un joint métallique non représenté.

Ce volant primaire est apte à être fixé au vilebrequin d'un moteur thermique via des rivets. Le moteur thermique est par exemple à trois ou quatre cylindres.

Le volant secondaire comprend selon l'exemple de la figure 1:
- un moyeu 12 présentant des cannelures permettant son montage sur un arbre,
- un flasque 13, encore appelé « voile », et fixé via des rivets 15 sur le moyeu 12,
- des corps pendulaires, chaque corps pendulaire comprenant deux masses pendulaires 14 respectivement disposée axialement d'un côté du voile 13, ce dernier jouant le rôle de support pour les corps pendulaires,
- un joint d'étanchéité 16, et
- une plaque 17 fixée sur le moyeu 12 et sur le voile 13 au moyen des rivets 15.

Le volant secondaire 3 intègre donc ici un dispositif d'amortissement pendulaire 20 dont le voile 13 forme le support.

Le composant 1 comprend encore des organes de rappel élastique 18 limitant la rotation du volant secondaire par rapport au volant primaire autour de l'axe de rotation X. Deux ressorts 18 sont ici prévus et il s'agit de ressorts courbes.

Comme on peut le voir sur la figure 1, le voile 13 comprend dans cet exemple deux pattes 19 définissant chacun une extension radiale et chacune de ces pattes 19 vient en contact avec un ressort 18 lorsque le volant secondaire se déplace en rotation autour de l'axe X par rapport au volant primaire. Les deux pattes 19 sont ici diamétralement opposés.

Dans l'exemple décrit, le volant primaire définit une bordure pour le déplacement radial vers l'extérieur des ressorts 18.

Sur la figure 2, le dispositif d'amortissement pendulaire 20 est au repos, c'est-à-dire qu'il ne filtre pas les oscillations de torsion du fait des acyclismes du moteur thermique.

Dans l'exemple de la figure 2, trois corps pendulaires sont prévus, étant répartis de façon uniforme sur le pourtour de l'axe X.

Comme on peut le voir sur les figures 2 à 4, chaque corps pendulaire comprend dans cet exemple:
- deux masses pendulaires 14, chaque masse pendulaire 14 s'étendant axialement en regard d'un côté du voile 13, et
- un unique organe de liaison 30 solidarisant les deux masses pendulaires 14 de ce corps pendulaire.

Dans l'exemple des figures 2 à 4, chaque organe de liaison 30 comprend une entretoise 31 rigidement fixée entre chaque masse pendulaire 14 d'un corps pendulaire par l'intermédiaire de rivets 34 visibles sur la figure 2 qui sont reçus dans des trous 32 ménagés dans l'entretoise 31, de manière à solidariser entre elles ces deux masses pendulaires 14.

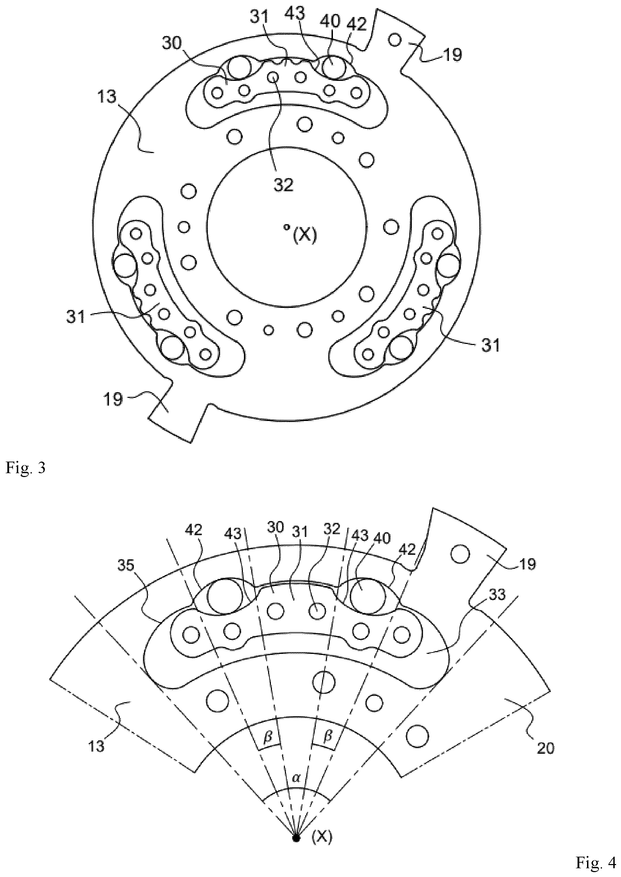

Chaque entretoise 31 s'étend en partie dans une fenêtre 33 ménagée dans le voile 13. Dans l'exemple considéré, la fenêtre 33 définit un espace vide à l'intérieur du voile 13, cette fenêtre étant délimitée par un contour fermé 35. Comme on peut le voir sur la figure 4, la fenêtre 33 définit, depuis l'axe de rotation (X), un secteur angulaire maximal (α).

Le dispositif 20 comprend encore dans l'exemple considéré des organes de roulement 40 guidant le déplacement des corps pendulaires par rapport au voile 13. Les organes de roulement 40 sont ici des rouleaux, comme on le verra par la suite. Dans l'exemple des figures 2 à 4, chaque rouleau conserve un diamètre sensiblement constant sur toute sa longueur.

Comme on le devine sur la figure 2, le dispositif 20 peut également comprendre des organes d'amortissement de butée 50 aptes à venir simultanément en contact avec une entretoise 31 et avec le voile 13 dans certaines positions relatives du voile 13 et des masses pendulaires 14, telles que les venues en butée à l'issue d'un déplacement depuis la position de repos pour filtrer une oscillation de torsion ou lors d'une chute radiale du corps pendulaire. Chaque organe d'amortissement de butée 50 est par exemple solidaire d'un corps pendulaire, étant monté sur chaque corps pendulaire et disposé de manière à s'interposer radialement entre l'entretoise 31 de ce corps pendulaire et le contour 35 de la fenêtre 33. Chaque organe d'amortissement de butée 50 comprend par exemple une ou plusieurs parties fixées sur l'entretoise 31.

Dans l'exemple décrit, le mouvement par rapport au voile 13 de chaque corps pendulaire est guidé par deux organes de roulement 40.

Comme on peut le voir sur la figure 4, chaque organe de roulement 11 coopère par roulement avec une seule première piste de roulement 42 solidaire du voile 13, et avec une seule deuxième piste de roulement 43 solidaire du corps pendulaire pour guider le déplacement du corps pendulaire en translation autour d'un axe fictif parallèle à l'axe de rotation X du support 2 et, le cas échéant, en rotation, notamment en rotation autour du centre de gravité dudit corps pendulaire.

Dans l'exemple considéré, chaque deuxième piste de roulement 43 est formée par une portion du bord radialement extérieur de l'entretoise 31 qui définit ainsi, via deux portions différentes de son bord radialement extérieur, les deuxièmes pistes de roulement 43 du corps pendulaire.

Chaque première piste de roulement 42 est dans l'exemple considéré définie par une partie du contour 35 de la fenêtre 33 dans laquelle est reçue l'entretoise 31. Dans l'exemple considéré, deux portions différentes du bord radialement extérieur du contour 35 définissent ainsi les premières pistes de roulement 42 associées au corps pendulaire. Chaque première piste de roulement définit, depuis l'axe de rotation (X), un secteur angulaire maximal (β).

Chaque première piste de roulement 42 est ici disposée radialement en regard d'une deuxième piste de roulement 43, de sorte qu'une même surface latérale de roulement d'un organe de roulement 40 roule alternativement sur la première piste de roulement 42 et sur la deuxième piste de roulement 43. La surface latérale de roulement de l'organe de roulement est ici un cylindre de rayon constant.

Comme on le devine sur la figure 2, des pièces d'interposition axiales entre le corps pendulaire et le voile 13, encore appelées « patin » peuvent être prévues. Un ou plusieurs patins sont par exemple portés de manière fixe par chaque masse pendulaire 14, sur leur face en regard du voile 13. La fixation de ces patins se faire par exemple via des pions 55 reçus dans des ouvertures ménagées dans les masses pendulaires 14.

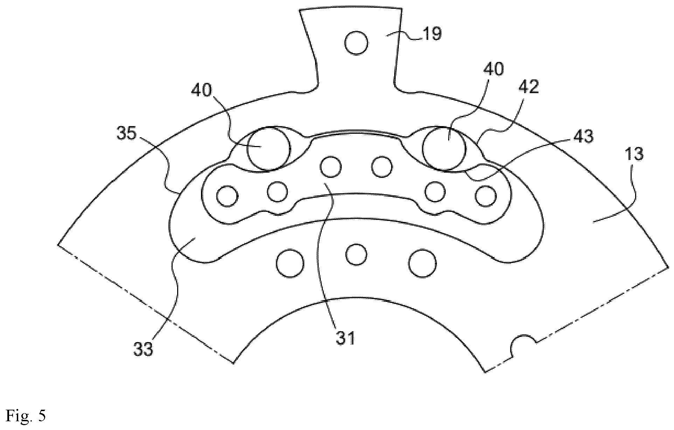

Selon l'exemple de mise en oeuvre de l'invention décrit en référence aux figures 2 à 4, chaque patte 19 du voile 13 est disposée à l'intérieur du secteur angulaire (α) d'une fenêtre 33 et, dans ce secteur angulaire (α), la patte 19 n'est pas disposée angulairement entre les deux premières pistes de roulement 42 définies par le bord radialement extérieur du contour 35 de la fenêtre 33. Plus précisément, et dans l'exemple des figures 2 à 4, la patte 19 n'est également disposée à l'intérieur d'aucun des deux secteurs angulaires (β) définis par les premières pistes de roulement 42. La patte 19 est ainsi disposée de manière à occuper en tout ou partie une position chevauchant angulairement la fenêtre 33 tout en étant au-delà de chaque première piste de roulement 42 définie par cette fenêtre 33. Cette disposition diffère de celle représentée sur la figure 5 dans laquelle la patte 19 est disposée angulairement entre les deux premières pistes de roulement 42 définies par la fenêtre 33.

En considérant les figures 2 et 3, on obtient les positionnements relatifs suivants pour les trois corps pendulaires et les deux pattes 19 de l'exemple considéré :
- un premier corps pendulaire est associé à une première fenêtre 33 définissant un secteur angulaire maximal (α) depuis l'axe de rotation (X) du voile 13, et une première patte 19 est disposée en tout ou partie dans ce secteur angulaire (α), tout en étant située angulairement ailleurs qu'entre les deux premières pistes de roulement 42 associées à ce premier corps pendulaire, notamment angulairement au-delà de chacune de ces premières pistes de roulement 42 lorsque la patte n'est pas non plus disposée dans un secteur angulaire maximal (β) défini depuis l'axe (X) par une première piste de roulement 42,
- un deuxième corps pendulaire est associé à une deuxième fenêtre 33 définissant un secteur angulaire maximal (α) depuis l'axe de rotation (X) du voile 13, et une deuxième patte 19 est disposée en tout ou partie dans ce secteur angulaire (α), tout en étant située angulairement ailleurs qu'entre les deux premières pistes de roulement 42 associées à ce deuxième corps pendulaire, notamment angulairement au-delà de chacune de ces premières pistes de roulement 42 lorsque la patte 19 n'est pas non plus disposée dans un secteur angulaire maximal (β) défini depuis l'axe (X) par une première piste de roulement 42, et
- un troisième corps pendulaire est associé à une troisième fenêtre 33 définissant un secteur angulaire maximal (α) depuis l'axe de rotation du voile 13, aucune patte n'étant disposée en tout ou partie dans ce secteur angulaire.

L'invention n'est pas limitée à l'exemple de mise en oeuvre qui vient d'être décrit.

Dans une variante, seule la première patte 19 est disposée dans un secteur angulaire maximal (α) défini par une fenêtre 33 tout en étant située angulairement ailleurs qu'entre deux premières pistes de roulement 42, la deuxième patte 19 n'étant pas disposée dans un secteur angulaire maximal (α) défini par une fenêtre 33.

## Revendications

1. Dispositif d'amortissement pendulaire (20), comprenant :
- un support (13) mobile en rotation autour d'un axe (X), et comprenant une patte (19) apte à coopérer avec des organes de rappel élastique (18),
- au moins un corps pendulaire, mobile par rapport au support (13) et comprenant deux masses pendulaires (14) respectivement disposées axialement d'un côté du support (13), ces deux masses pendulaires étant solidarisées entre elles par un organe de liaison (30), et
- deux organes de roulement (40) guidant le déplacement du corps pendulaire par rapport au support (13), chaque organe de roulement (40) coopérant avec une première piste de roulement (42) solidaire du support (13) et avec une deuxième piste de roulement (43) solidaire du corps pendulaire,
chaque première piste de roulement (42) étant définie par un bord d'une même fenêtre (33) ménagée dans le support (13) radialement intérieurement par rapport à la patte (19), et chaque deuxième piste de roulement (43) étant définie par un bord d'une même entretoise (31) de l'organe de liaison,
la fenêtre (33) ménagée dans le support (13) définissant un secteur angulaire maximal (α) depuis l'axe de rotation (X) du support (13), et
**caractérisé en ce que** la patte (19) est disposée en tout ou partie dans ce secteur angulaire (α), et **en ce que** la patte (19) est située angulairement ailleurs qu'entre les deux premières pistes de roulement (42).

2. Dispositif selon la revendication 1, le corps pendulaire se déplaçant angulairement entre deux positions de butée contre le support (13), le corps pendulaire étant angulairement en chevauchement avec la patte (19) dans l'une de ces positions de butée.

3. Dispositif selon la revendication 1 ou 2, chaque première piste de roulement (42) définissant un secteur angulaire maximal (β) depuis l'axe de rotation du support (13) et la patte (19) n'étant disposée à l'intérieur d'aucun de ces deux secteurs angulaires maximaux (β) définis par les premières pistes de roulement (42).

4. Dispositif selon l'une quelconque des revendications précédentes, comprenant trois corps pendulaires se succédant angulairement autour de l'axe (X) de rotation du support (13).

5. Dispositif selon la revendication 4, le support (13) comprenant deux pattes (19) diamétralement opposées, les corps pendulaires et ces pattes (19) étant telles que:
- un premier corps pendulaire associé à une première fenêtre (33) définit un secteur angulaire maximal (α) depuis l'axe de rotation (X) du support, et une première patte (19) est disposée en tout ou partie dans ce secteur angulaire (α), la première patte (19) étant située angulairement ailleurs qu'entre les deux premières pistes de roulement (42) associées à ce premier corps pendulaire, notamment angulairement au-delà de chacune de ces premières pistes de roulement (42),
- un deuxième corps pendulaire associé à une deuxième fenêtre (33) définit un secteur angulaire maximal (α) depuis l'axe de rotation (X) du support, et une deuxième patte (19) est disposée en tout ou partie dans ce secteur angulaire (α), la deuxième patte (19) étant située angulairement ailleurs qu'entre les deux premières pistes de roulement (42) associées à ce deuxième corps pendulaire, notamment angulairement au-delà de chacune de ces premières pistes de roulement (42), et
- un troisième corps pendulaire associé à une troisième fenêtre (33) définit un secteur angulaire maximal (α) depuis l'axe de rotation (X) du support (13), aucune patte n'est disposée en tout ou partie dans ce secteur angulaire (α).

6. Dispositif selon l'une quelconque des revendications précédentes, l'organe de liaison (30) comprenant une pluralité de rivets assemblant l'entretoise (31) aux deux masses pendulaires (14).

7. Dispositif selon l'une quelconque des revendications précédentes, les unes au moins des premières (42) et deuxièmes (43) pistes de roulement ayant des formes choisies pour que le corps pendulaire soit déplacé par rapport au support (13) à la fois en translation autour d'un axe fictif parallèle à l'axe de rotation du support, et également en rotation sur lui-même, notamment en rotation autour de son centre de gravité.

8. Composant (1) pour système de transmission d'un véhicule automobile, le composant étant un double volant amortisseur, et comprenant :
- le dispositif d'amortissement pendulaire (20) selon l'une quelconque des revendications précédentes, et
- une pluralité d'organes de rappel élastique (18), la patte (19) interagissant avec deux organes de rappel élastique (18).

9. Système de transmission, notamment pour véhicule hybride, comprenant :
- le composant (1) selon la revendication précédente, et
- un double embrayage, à sec ou humide, recevant le couple en sortie de ce composant.

## Patentansprüche

1. Pendeldämpfungsvorrichtung (20), umfassend:
- einen Träger (13), der drehbeweglich um eine Achse (X) ist und eine Lasche (19) umfasst, die geeignet ist, mit elastischen Rückstellorganen (18) zusammenzuwirken,
- mindestens einen Pendelkörper, der bezüglich des Trägers (13) beweglich ist und zwei Pendelmassen (14) umfasst, die axial jeweils auf einer Seite des Trägers (13) angeordnet sind, wobei diese zwei Pendelmassen durch ein Verbindungsorgan (30) fest miteinander verbunden sind, und
- zwei Wälzelemente (40), welche die Bewegung des Pendelkörpers bezüglich des Trägers (13) führen, wobei jedes Wälzelement (40) mit einer ersten Laufbahn (42), die mit dem Träger (13) fest verbunden ist, und mit einer zweiten Laufbahn (43), die mit dem Pendelkörper fest verbunden ist, zusammenwirkt,
wobei jede erste Laufbahn (42) durch einen Rand ein und desselben Fensters (33) definiert ist, das in dem Träger (13) radial innen in Bezug auf die Lasche (19) ausgebildet ist, und wobei jede zweite Laufbahn (43) durch einen Rand ein und desselben Distanzstücks (31) des Verbindungsorgans definiert ist,
wobei das in dem Träger (13) ausgebildete Fenster (33) einen maximalen Winkelsektor (α) von der Drehachse (X) des Trägers (13) aus definiert, und
**dadurch gekennzeichnet, dass** die Lasche (19) ganz oder teilweise in diesem Winkelsektor (α) angeordnet ist, und dadurch, dass sich die Lasche (19) winkelmäßig nicht zwischen den zwei ersten Laufbahnen (42) befindet.

2. Vorrichtung nach Anspruch 1, wobei sich der Pendelkörper winkelmäßig zwischen zwei Anschlagpositionen am Träger (13) verlagert, wobei sich der Pendelkörper in einer dieser Anschlagpositionen mit der Lasche (19) winkelmäßig überlappt.

3. Vorrichtung nach Anspruch 1 oder 2, wobei jede erste Laufbahn (42) einen maximalen Winkelsektor (β) von der Drehachse des Trägers (13) aus definiert und die Lasche (19) nicht innerhalb eines dieser maximalen Winkelsektoren (β) angeordnet ist, die von den ersten Laufbahnen (42) definiert werden.

4. Vorrichtung nach einem der vorhergehenden Ansprüche, welche drei Pendelkörper umfasst, die in Winkelrichtung um die Drehachse (X) des Trägers (13) herum aufeinanderfolgen.

5. Vorrichtung nach Anspruch 4, wobei der Träger (13) zwei einander diametral gegenüberliegende Laschen (19) umfasst, wobei die Pendelkörper und diese Laschen (19) so beschaffen sind, dass:
- ein erster Pendelkörper, der einem ersten Fenster (33) zugeordnet ist, einen maximalen Winkelsektor (α) von der Drehachse (X) des Trägers aus definiert und eine erste Lasche (19) ganz oder teilweise in diesem Winkelsektor (α) angeordnet ist, wobei sich die erste Lasche (19) winkelmäßig nicht zwischen den zwei ersten Laufbahnen (42), die diesem ersten Pendelkörper zugeordnet sind, insbesondere winkelmäßig jenseits jeder dieser ersten Laufbahnen (42) befindet,
- ein zweiter Pendelkörper, der einem zweiten Fenster (33) zugeordnet ist, einen maximalen Winkelsektor (α) von der Drehachse (X) des Trägers aus definiert und eine zweite Lasche (19) ganz oder teilweise in diesem Winkelsektor (α) angeordnet ist, wobei sich die zweite Lasche (19) winkelmäßig nicht zwischen den zwei ersten Laufbahnen (42), die diesem zweiten Pendelkörper zugeordnet sind, insbesondere winkelmäßig jenseits jeder dieser ersten Laufbahnen (42) befindet, und
- ein dritter Pendelkörper, der einem dritten Fenster (33) zugeordnet ist, einen maximalen Winkelsektor (α) von der Drehachse (X) des Trägers (13) aus definiert und keine Lasche ganz oder teilweise in diesem Winkelsektor (α) angeordnet ist.

6. Vorrichtung nach einem der vorhergehenden Ansprüche, wobei das Verbindungsorgan (30) mehrere Niete umfasst, mit denen das Distanzstück (31) mit den zwei Pendelmassen (14) zusammengefügt ist.

7. Vorrichtung nach einem der vorhergehenden Ansprüche, wobei wenigstens die einen von den ersten (42) und zweiten (43) Laufbahnen Formen aufweisen, die so gewählt sind, dass der Pendelkörper in Bezug auf den Träger (13) gleichzeitig translatorisch um eine zur Drehachse des Trägers parallele fiktive Achse und auch rotatorisch um sich selbst, insbesondere rotatorisch um seinen Schwerpunkt, bewegt wird.

8. Komponente (1) für ein Kraftübertragungssystem eines Kraftfahrzeugs, wobei die Komponente ein Zweimassenschwungrad ist, umfassend:
- die Pendeldämpfungsvorrichtung (20) nach einem der vorhergehenden Ansprüche und
- mehrere elastische Rückstellorgane (18), wobei die Lasche (19) mit zwei elastischen Rückstellorganen (18) interagiert.

9. Kraftübertragungssystem, insbesondere für ein Hybridfahrzeug, umfassend:
- die Komponente (1) nach dem vorhergehenden Anspruch, und
- eine trockene oder nasse Doppelkupplung, die das Drehmoment am Ausgang dieser Komponente aufnimmt.

## Claims

1. Pendulum damping device (20) comprising:
- a support (13) which is rotatable about an axis (X) and comprises a tab (19) that is able to cooperate with elastic return members (18),
- at least one pendulum body, which is able to move with respect to the support (13) and comprises two pendulum masses (14) that are respectively disposed axially on one side of the support (13), these two pendulum masses being secured together by a connecting member (30), and
- two rolling members (40) that guide the movement of the pendulum body with respect to the support (13), each rolling member (40) cooperating with a first raceway (42) that is as one with the support (13) and with a second raceway (43) that is as one with the pendulum body,
each first raceway (42) being defined by an edge of one and the same window (33) provided in the support (13) radially on the inside with respect to the tab (19), and each second raceway (43) being defined by an edge of one and the same spacer (31) of the connecting member,
the window (33) provided in the support (13) defining a maximum angular sector (α) from the axis of rotation (X) of the support (13), and the tab (19) being disposed entirely or partially in this angular sector (α), the tab (19) being situated angularly elsewhere than between the two first raceways (42).

2. Device according to Claim 1, the pendulum body moving angularly between two positions of abutment against the support (13), the pendulum body angularly overlapping the tab (19) in one of these abutment positions.

3. Device according to Claim 1 or 2, each first raceway (42) defining a maximum angular sector (β) from the axis of rotation of the support (13) and the tab (19) not being disposed within either of these two maximum angular sectors (β) defined by the first raceways (42).

4. Device according to any one of the preceding claims, comprising three pendulum bodies that follow one another angularly about the axis of rotation (X) of the support (13).

5. Device according to Claim 4, the support (13) comprising two diametrically opposite tabs (19), the pendulum bodies and these tabs (19) being such that:
- a first pendulum body associated with a first window (33) defines a maximum angular sector (α) from the axis of rotation (X) of the support, and a first tab (19) is disposed entirely or partially in this angular sector (α), the first tab (19) being situated angularly elsewhere than between the two first raceways (42) associated with this first pendulum body, in particular angularly beyond each of these first raceways (42),
- a second pendulum body associated with a second window (33) defines a maximum angular sector (α) from the axis of rotation (X) of the support, and a second tab (19) is disposed entirely or partially in this angular sector (α), the second tab (19) being situated angularly elsewhere than between the two first raceways (42) associated with this second pendulum body, in particular angularly beyond each of these first raceways (42), and
- a third pendulum body associated with a third window (33) defines a maximum angular sector (α) from the axis of rotation (X) of the support (13), no tab being disposed entirely or partially in this angular sector (α).

6. Device according to any one of the preceding claims, the connecting member (30) comprising a plurality of rivets joining the spacer (31) to the two pendulum masses (14).

7. Device according to any one of the preceding claims, the first raceways (42) and/or the second raceways (43) having shapes chosen so that the pendulum body is moved with respect to the support (13) both in translation about an imaginary axis parallel to the axis of rotation of the support, and in rotation on itself, in particular in rotation about its centre of gravity.

8. Component (1) for a motor vehicle transmission system, the component being a dual mass flywheel and comprising:
- the pendulum damping device (20) according to any one of the preceding claims, and
- a plurality of elastic return members (18), the tab (19) interacting with two elastic return members (18).

9. Transmission system, in particular for a hybrid vehicle, comprising:
- the component (1) according to the preceding claim, and
- a wet or dry dual clutch that receives the output torque from this component.
